# EUROPÄISCHE PATENTANMELDUNG

(11) **EP 4 007 212 A1**
(43) Veröffentlichungstag der Anmeldung: **01.06.2022**
(21) Anmeldenummer: 20210623.3
(22) Anmeldetag: 30.11.2020
(51) Int. Cl.: H04L 12/24

(54) **VERFAHREN ZUR ÜBERWACHUNG UND/ODER STEUERUNG VON STEUERUNGSANWENDUNGEN BEREITSTELLENDEN KOMMUNIKATIONSGERÄTEN UND KOMMUNIKATIONSGERÄT**

(71) Anmelder: Siemens Aktiengesellschaft, 80333 München (DE)
(72) Erfinder: Schertler, Daniel, 76764 Rheinzabern (DE)

(57) **Zusammenfassung**

Zur Überwachung und/oder Steuerung von Steuerungsanwendungen bereitstellenden Kommunikationsgeräten durch ein Kommunikationsnetz-Management-System wird in den Kommunikationsgeräten jeweils eine Kommunikationssteuerungsanwendung installiert wird, die Konfigurations- und/oder Geräteinformationen des jeweiligen Kommunikationsgeräts entsprechend einem Kommunikationsnetz-Management-Protokoll an das Kommunikationsnetz-Management-System bereitstellt. Die Kommunikationssteuerungsanwendungen werden jeweils an eine geräteseitige generische Schnittstelle zur Abstraktion von Geräteeigenschaften und/oder zur Bereitstellung von Gerätefunktionen des jeweiligen Kommunikationsgeräts gekoppelt und greifen auf gerätespezifische Dienste zur Abfrage und/oder Einstellung von Geräteeigenschaften und/oder -funktionen des jeweiligen Kommunikationsgeräts zu.

## Beschreibung

Die vorliegende Erfindung betrifft ein Verfahren zur Überwachung bzw. Steuerung von Steuerungsanwendungen bereitstellenden Kommunikationsgeräten und ein Kommunikationsgerät zur Durchführung eines solchen Verfahrens. Durch die Steuerungsanwendungen werden insbesondere Dienste bzw. Funktionen eines industriellen Automatisierungssystems bereitgestellt.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus EP 3 534 592 A1 ist ein Verfahren zur Datenübermittlung zwischen einem industriellen Automatisierungssystem und einem Server-System über ein Weitverkehrsnetz bekannt, bei dem Automatisierungsgeräte Messwerte bzw. Zustandsinformationen sowie diesen zugeordnete Klassifizierungen über Kommunikationsverbindungen innerhalb des Automatisierungssystems an eine Datenverteilereinheit des Automatisierungssystems übermitteln. Anhand der Klassifizierungen gliedert die Datenverteilereinheit die Messwerte bzw. Zustandsinformationen hierarchisch in für eine Datenübermittlung auswählbare Kategorien und übermittelt Messwerte bzw. Zustandsinformationen, die von für eine Datenübermittlung zum Server-System ausgewählten Kategorien umfasst sind, innerhalb einer vorgebbaren Anzahl von Kommunikationsverbindungen gebündelt über das Weitverkehrsnetz zum Server-System. Ereignisgesteuert bzw. in Abhängigkeit eines Betriebszustands des industriellen Automatisierungssystems initiiert, begrenzt hinsichtlich Bandbreite oder beendet die Datenverteilereinheit Kommunikationsverbindungen mit dem Server-System.

In der älteren internationalen Patentanmeldung mit dem Anmeldeaktenkennzeichen PCT/EP2020/081253 ist ein Verfahren zur Überwachung von Datenverkehr in einem Kommunikationsnetz beschrieben, über das Steuerungsanwendungen mittels Ablaufsteuerungskomponenten bereitgestellt werden. Für eine Nutzung der Ablaufsteuerungskomponenten werden erste Zugriffsrechte überprüft. Eine Zugriffssteuerungseinrichtung gibt durch die Ablaufsteuerungskomponenten genutzte Kommunikationsnetz-Schnittstellen zum Zugriff frei und überprüft hierfür zweite Zugriffsrechte zur Nutzung der Kommunikationsnetz-Schnittstellen. Bei einer Anfrage eines Benutzers zur Überwachung von Datenverkehr, der von einer ausgewählten Steuerungsanwendung ausgeht bzw. dort terminiert, fragt die Zugriffssteuerungseinrichtung von einer Überwachungseinrichtung erste Zugriffsrechte des Benutzers zur Nutzung der ausgewählten Steuerungsanwendung ab. In Abhängigkeit der von der Überwachungseinrichtung abgefragten ersten Zugriffsrechte räumt die Zugriffssteuerungseinrichtung für die angefragte Überwachung des Datenverkehrs zweite Zugriffsrechte zur Nutzung der Kommunikationsnetz-Schnittstellen ein, die der ausgewählten Steuerungsanwendung zugeordnet sind.

Die ältere europäische Patentanmeldung mit dem Anmeldeaktenkennzeichen 20198170 betrifft ein Kommunikationsgerät zur Kopplung mehrerer weiterer Kommunikationsgeräte, das eine Ablaufsteuerungsumgebung umfasst, in die Ablaufsteuerungskomponenten zur dortigen Ausführung ladbar sind. Dabei weist die Ablaufsteuerungsumgebung eine Schnittstelle zum Zugriff auf ein Kopplungselement und auf Sende- und Empfangseinheiten des Kommunikationsgeräts auf. Außerdem ist eine vorgegebene Ablaufsteuerungskomponente zur Kopplung mehrerer physikalischer bzw. virtueller Kommunikationsgeräte vorgesehen. Die vorgegebene Ablaufsteuerungskomponente ist dafür ausgestaltet und eingerichtet, über die Ablaufsteuerungsumgebung ausgewählte Sende- und Empfangseinheiten exklusiv zu allokieren und separat von einer Controller-Funktionseinheit des Kommunikationsgerät zur Weiterleitung von Datagrammen geschaltet miteinander zu verknüpfen.

Wenn Kommunikationsfunktionen bereitstellende Cloud bzw. Edge Computing Geräte durch ein Kommunikationsnetz-Management-System überwacht und ggf. gesteuert werden sollen, so müssen diese Cloud bzw. Edge Computing Geräte Kommunikatiosprotokolle wie SNMP (Simple Network Management Protocol) oder LLDP (Link-local Registration Protocol) unterstützen. Dies erschwert eine Integration von Cloud bzw. Edge Computing Geräten in Kommunikationsnetz-Management-Systeme.

Der vorliegenden Erfindung liegt die Aufgabe zugrunde, ein zuverlässiges und einfach zu realisierendes Verfahren zur Überwachung bzw. Steuerung von Steuerungsanwendungen bereitstellenden Kommunikationsgeräten durch ein Kommunikationsnetz-Management-System zu schaffen sowie eine geeignete Vorrichtung zur Durchführung des Verfahrens anzugeben.

Diese Aufgabe wird erfindungsgemäß durch ein Verfahren mit den in Patentanspruch 1 angegebenen Merkmalen und durch ein Kommunikationsgerät mit den in Patentanspruch 13 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Überwachung bzw. Steuerung von Steuerungsanwendungen bereitstellenden Kommunikationsgeräten durch ein Kommunikationsnetz-Management-System werden durch mehrere Kommunikationsgeräte jeweils Steuerungsanwendungen mittels Ablaufsteuerungskomponenten bereitgestellt. Diese Ablaufsteuerungskomponenten sind in mittels der Kommunikationsgeräte gebildete Ablaufsteuerungsumgebungen ladbar und dort ausführbar.

Insbesondere sind bzw. umfassen die Ablaufsteuerungskomponenten Software-Container, die jeweils von anderen Software-Containern oder Container-Gruppen isoliert innerhalb der Ablaufsteuerungsumgebung auf einem Host-Betriebssystem ablaufen, das im jeweiligen Steuerungsanwendungen bereitstellenden Kommunikationsgerät installiert ist. Vorteilhafterweise nutzen die Software-Container jeweils gemeinsam mit anderen auf dem Kommunikationsgerät ablaufenden Software-Containern einen Kernel des Host-Betriebssystems des jeweiligen Steuerungsanwendungen bereitstellenden Kommunikationsgeräts. Speicherabbilder für die Software-Container können beispielsweise aus einem durch eine Vielzahl von Nutzern lesend bzw. schreibend zugreifbaren Speicher- und Bereitstellungssystem abgerufen werden.

In den Steuerungsanwendungen bereitstellenden Kommunikationsgeräten wird erfindungsgemäß jeweils eine Kommunikationssteuerungsanwendung installiert, die Konfigurations- bzw. Geräteinformationen des jeweiligen Kommunikationsgeräts entsprechend einem Kommunikationsnetz-Management-Protokoll an das Kommunikationsnetz-Management-System bereitstellt. Vorzugsweise sind Kommunikationssteuerungsanwendungen für sämtliche Steuerungsanwendungen bereitstellende Kommunikationsgeräte identisch ausgestaltet und können dementsprechend einheitlich bereitgestellt werden.

Die Konfigurations- bzw. Geräteinformationen des jeweiligen Kommunikationsgeräts können durch die die Kommunikationssteuerungsanwendungen insbesondere entsprechend Simple Network Management Protocol (SNMP), Link Layer Discovery Protocol (LLDP) bzw. Discovery and Basic Configuration Protocol (DCP) an das Kommunikationsnetz-Management-System bereitgestellt werden. Damit bedarf es seitens des Kommunikationsnetz-Management-Systems zur Integration der Steuerungsanwendungen bereitstellenden Kommunikationsgeräte grundsätzlich keiner Änderungen.

Darüber hinaus werden die Kommunikationssteuerungsanwendungen erfindungsgemäß jeweils an eine geräteseitige generische Schnittstelle zur Abstraktion von Geräteeigenschaften bzw. zur Bereitstellung von Gerätefunktionen des jeweiligen Kommunikationsgeräts gekoppelt. Die generischen Schnittstellen greifen jeweils auf gerätespezifische Dienste zur Abfrage bzw. Einstellung von Geräteeigenschaften bzw. -funktionen des jeweiligen Kommunikationsgeräts zu und stellen mittels dieser Dienste abgefragte bzw. eingestellte Konfigurations- bzw. Geräteinformationen an die Kommunikationssteuerungsanwendungen bereit. Vorzugsweise stellen die generischen Schnittstellen jeweils mittels der gerätespezifischen Dienste abgefragte bzw. eingestellte die Konfigurations- bzw. Geräteinformationen entsprechend einem generischen Gerätefunktionsmodell an die Kommunikationssteuerungsanwendungen bereitstellen. Dieses generische Gerätefunktionsmodell kann universell für sämtliche Steuerungsanwendungen bereitstellenden Kommunikationsgeräte wiederverwendet werden und ermöglicht damit eine effiziente Integration einer Vielzahl unterschiedlicher Kommunikationsgeräte in das Kommunikationsnetz-Management-System.

Insgesamt ermöglicht die vorliegende Erfindung eine einfache Integration von Cloud bzw. Edge Computing Geräten mit Kommunikationsfunktionen in ein Kommunikationsnetz-Management-System. Dabei ist es nicht erforderlich, dass die Cloud bzw. Edge Computing Geräte von vornherein mit z.B. SNMP-, LLDP- oder DCP-Schnittstellen zur Abfrage mittels einer Management Information Base (MIB) verwalteter Informationen durch ein Kommunikationsnetz-Management-System ausgestattet sind.

Entsprechend einer besonders bevorzugten Ausgestaltung der vorliegenden Erfindung stellen insbesondere ausgewählte Ablaufsteuerungskomponenten Dienste bzw. Funktionen eines industriellen Automatisierungssystems bereit. Dabei können die Dienste jeweils mehrere gleichartige oder identische Ablaufsteuerungskomponenten umfassen, die durch unterschiedliche Kommunikationsgeräte bzw. Server-Einrichtungen bereitgestellt werden. Insbesondere können die Ablaufsteuerungskomponenten auf diese Weise jeweils vom Kommunikationsgerät auf ein anderes, im Wesentlichen gleichartiges Kommunikationsgerät bzw. auf eine Server-Einrichtung zur dortigen Ausführung migriert bzw. auf anderen Kommunikationsgeräten bzw. auf Server-Einrichtungen zeitgleich ausgeführt werden. Dies ermöglicht eine bedarfsorientierte Bereitstellung von Steuerungsanwendungen mittels der Ablaufsteuerungskomponenten.

Vorzugsweise umfassen die Steuerungsanwendungen bereitstellenden Kommunikationsgeräte jeweils mehrere Anschlüsse für weitere Kommunikationsgeräte, mehrere den Anschlüssen zugeordnete Sende- und Empfangseinheiten, ein Kopplungselement zur geschalteten Verknüpfung der Sende- und Empfangseinheiten und einen Pufferspeicher für über das Kopplungselement weiterzuleitende Datagramme. Dabei ist den Sende- und Empfangseinheiten und dem Kopplungselement eine Controller-Funktionseinheit zur Verarbeitung eines Kommunikationsprotokollstapels zugeordnet.

Darüber hinaus weisen die Steuerungsanwendungen bereitstellenden Kommunikationsgeräte vorzugsweise jeweils einen Prozessor zur Verarbeitung von Programm-Code und einen Programm-Code-Speicher auf. Die Ablaufsteuerungsumgebungen werden vorteilhafterweise jeweils mittels des Prozessors und des Speichers gebildet. Dabei weisen die Ablaufsteuerungsumgebungen jeweils eine Schnittstelle zum Zugriff auf das Kopplungselement und auf die Sende- und Empfangseinheiten auf.

Entsprechend einer weiteren bevorzugten Ausgestaltung der vorliegenden Erfindung sind die Steuerungsanwendungen bereitstellenden Kommunikationsgeräte Switches oder Bridges. Dabei ist das Koppel-Element ein Backplane-Switch, und die Controller-Funktionseinheit ist ein Controller für den Backplane Switch. Außerdem stellt die Controller-Funktionseinheit Funktionen gemäß Media Redundancy Protocol, High-availability Seamless Redundancy Protocol, Link-local Registration Protocol, Resource Allocation Protocol implementiert bzw. VLAN-Funktionen bereit. Insbesondere kann die Controller-Funktionseinheit ganz oder teilweise mittels Container-Virtualisierung bzw. Ablaufsteuerungskomponenten realisiert werden.

Das erfindungsgemäße Kommunikationsgerät ist insbesondere zur Durchführung eines Verfahrens entsprechend vorangehenden Ausführungen geeignet und weist eine Ablaufsteuerungsumgebung auf, die dazu ausgestaltet und eingerichtet ist, Steuerungsanwendungen mittels Ablaufsteuerungskomponenten bereitzustellen, die in die Ablaufsteuerungsumgebung ladbar und dort ausführbar sind. Außerdem umfasst das Kommunikationsgerät eine installierte Kommunikationssteuerungsanwendung, die dazu ausgestaltet und eingerichtet ist, Konfigurations- bzw. Geräteinformationen des Kommunikationsgeräts entsprechend einem Kommunikationsnetz-Management-Protokoll an ein Kommunikationsnetz-Management-System bereitzustellen. Dabei ist die Kommunikationssteuerungsanwendung an eine geräteseitige generische Schnittstelle zur Abstraktion von Geräteeigenschaften bzw. zur Bereitstellung von Gerätefunktionen des Kommunikationsgeräts gekoppelt.

Darüber hinaus ist die generische Schnittstelle erfindungsgemäß dazu ausgestaltet und eingerichtet, auf gerätespezifische Dienste zur Abfrage bzw. Einstellung von Geräteeigenschaften bzw. -funktionen des Kommunikationsgeräts zuzugreifen. Des Weiteren ist die generische Schnittstelle erfindungsgemäß dazu ausgestaltet und eingerichtet, mittels dieser Dienste abgefragte bzw. eingestellte Konfigurations- bzw. Geräteinformationen an die Kommunikationssteuerungsanwendung bereitstellen.

Die vorliegende Erfindung wird nachfolgend an einem Ausführungsbeispiel anhand der Zeichnung näher erläutert. Es zeigt
- Figur 1: eine Anordnung mit einer zentralen Steuerungseinheit eines Kommunikationsnetz-Management-Systems, mehreren operativen Funktionseinheiten und mehreren Kommunikations- bzw. Automatisierungsgeräten,
- Figur 2: eine Detaildarstellung eines Kommunikations- bzw. Automatisierungsgeräts gemäß Figur 1, das als Edge Computing Gerät ausgestaltet ist.

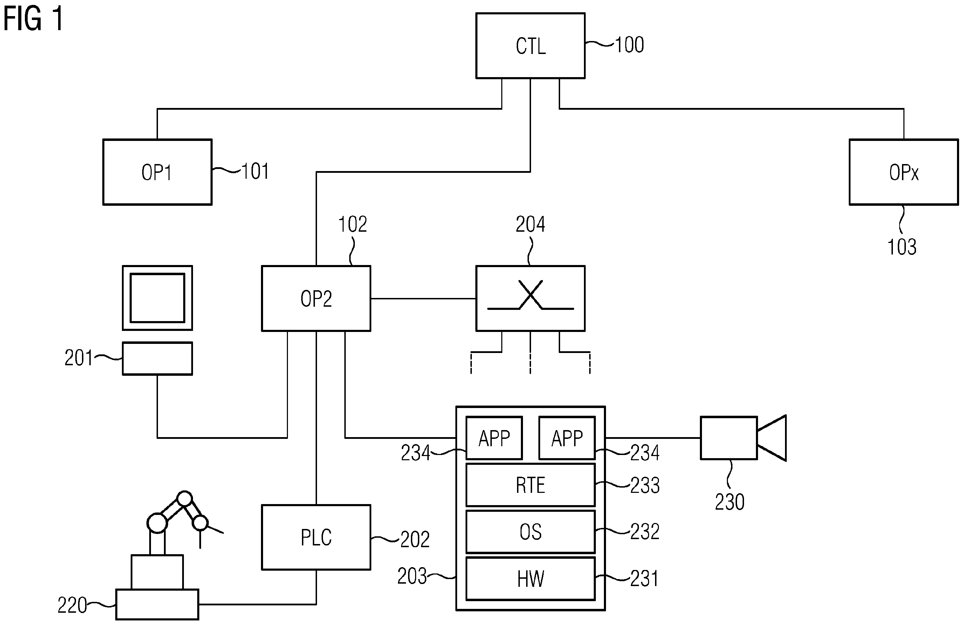

Die in Figur 1 dargestellte Anordnung umfasst ein Kommunikationsnetz-Management-System mit einer zentralen Steuerungseinheit 100 und mehreren operativen Funktionseinheiten 101-103 sowie mehrere Kommunikations- bzw. Automatisierungsgeräte 201-204. Die operativen Funktionseinheiten 101-103 werden durch die zentrale Steuerungseinheit 100 verwaltet und sind jeweils mehreren Kommunikations- bzw. Automatisierungsgeräten zugeordnet. Der operativen Funktionseinheit 102 sind beispielsweise die Kommunikations- bzw. Automatisierungsgeräte 201-204 zugeordnet. Zu diesen Kommunikations- bzw. Automatisierungsgeräten zählen im vorliegenden Ausführungsbeispiel eine Bedien- und Beobachtungsstation 201 eines industriellen Automatisierungssystems, eine speicherprogrammierbare Steuerung 202, ein Edge Computing Gerät 203 und ein Switch 204 zum Anschluss weiterer Kommunikations- bzw. Automatisierungsgeräte.

Das Bedien- und Beobachtungsstation 201 dient zur Visualisierung von Prozessdaten bzw. Mess- und Steuerungsgrößen, die durch die speicherprogrammierbare Steuerung 202, das Edge Computing Gerät 203 oder andere Automatisierungsgeräte verarbeitet bzw. erfasst werden. Insbesondere wird die Bedien- und Beobachtungsstation 201 zur Anzeige von Werten eines Regelungskreises und zur Veränderung von Regelungsparametern oder -programmen verwendet.

Die speicherprogrammierbare Steuerung 202 weist zumindest ein integriertes oder zugeordnetes Kommunikationsmodul auf und dient zur Steuerung einer Maschine oder einer technischen Anlage, beispielsweise eines Roboters 220 oder einer Fördervorrichtung. Insbesondere umfasst die speicherprogrammierbare Steuerung 202 zumindest eine Zentraleinheit und eine Eingabe/Ausgabe-Einheit. Die Eingabe/Ausgabe-Einheit dient einem Austausch von Steuerungs- und Messgrößen zwischen der speicherprogrammierbare Steuerung 202 und einer durch die speicherprogrammierbare Steuerung 202 gesteuerten Maschine oder Vorrichtung. Die Zentraleinheit der speicherprogrammierbare Steuerung 202 ist insbesondere für eine Ermittlung geeigneter Steuerungsgrößen aus erfassten Messgrößen vorgesehen.

Das Edge Computing Gerät 203 implementiert vorzugsweise Funktionen von Steuerungsgeräten eines industriellen Automatisierungssystems, wie speicherprogrammierbaren Steuerungen, oder von Feldgeräten, wie Sensoren oder Aktoren. Im vorliegenden Ausführungsbeispiel dient das Edge Computing Gerät 203 einem Austausch von Steuerungs- und Messgrößen mit durch das Edge Computing Gerät 203 gesteuerten Maschinen oder Vorrichtungen, beispielsweise einer Kamera 230 eines Machine Vision Systems. Insbesondere ist das Edge Computing Gerät 203 für eine Ermittlung geeigneter Steuerungsgrößen aus erfassten Messgrößen vorgesehen. Nachfolgende Ausführungen zum Edge Computing Gerät 203 gelten für Cloud oder Fog Computing Geräte in analoger Weise.

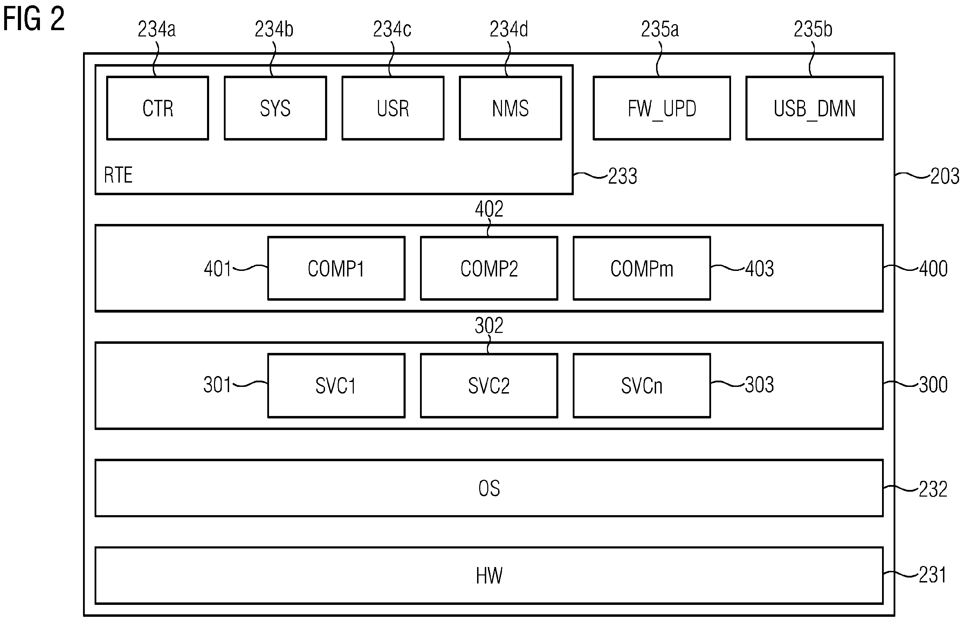

Durch das Edge Computing Gerät 203 können Steuerungsanwendungen mittels Ablaufsteuerungskomponenten 234 bereitgestellt werden, die in eine auf dem Edge Computing Gerät 203 installierte Ablaufsteuerungsumgebung 233 ladbar und dort ausführbar sind. Die Ablaufsteuerungsumgebung 233 ist als Anwendung auf einem Host-Betriebssystem 232 des Edge Computing Geräts 203 installiert. Das Host-Betriebssystem 232 abstrahiert Hardware-Komponenten 231 des Edge Computing Geräts 203 zur Nutzung durch dort installierte Anwendungen. Entsprechend Figur 2 können auf dem Host-Betriebssystem 232 des Edge Computing Geräts 203 neben der Ablaufsteuerungsumgebung 233 eine Anwendung 235a für Firmware-Updates und eine Anwendung 235b zum Zugriff auf USB-Speichergeräte installiert sein. Zur Realisierung der Ablaufsteuerungsumgebung 233 und zur Ausführung von Steuerungsanwendungen umfasst das Edge Computing Gerät 203 einen Prozessor zur Verarbeitung von Programm-Code und einen Programm-Code-Speicher.

Die Ablaufsteuerungskomponenten 234, 234a-d können vom Edge Computing Gerät 203 auf eine anderes Edge Computing Gerät oder auf eine Server-Einrichtung zur dortigen Ausführung migriert bzw. auf anderen Edge Computing Geräten oder Server-Einrichtungen zeitgleich ausgeführt werden. Im vorliegenden Ausführungsbeispiel sind bzw. umfassen die Ablaufsteuerungskomponenten Software-Container, die jeweils von anderen Software-Containern, Container-Gruppen bzw. Pods isoliert in einer Ablaufsteuerungsumgebung auf dem Host-Betriebssystem 232 des Edge Computing Geräts 203 ablaufen. Dabei nutzen die Software-Container jeweils gemeinsam mit anderen auf dem Edge Computing Gerät 203 ablaufenden Software-Containern einen Kernel des Host-Betriebssystems 232 des Edge Computing Geräts 203.

Eine Isolation der Ablaufsteuerungskomponenten 234, 234a-d bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Neben Ablaufsteuerungskomponenten 234b, 234c für System- bzw. Benutzer-Anwendungen können vorteilhafterweise auch Ablaufsteuerungskomponenten 234a vorgesehen werden, die Dienste bzw. Funktionen eines industriellen Automatisierungssystems implementieren. Auf diese Weise kann das Edge Computing Gerät 203 die Funktionen von speicherprogrammierbaren Steuerungen, Sensoren oder Aktoren realisieren. Darüber hinaus können die durch das Edge Computing Gerät 203 verfügbar gemachten Dienste mehrere gleichartige oder identische Ablaufsteuerungskomponenten umfassen, die durch unterschiedliche Edge Computing Geräte, Kommunikationsgeräte bzw. Server-Einrichtungen bereitgestellt werden. Eine Bereitstellung mehrerer gleichartiger Steuerungsanwendungen auf unterschiedlichen Server-Einrichtungen bzw. mittels unterschiedlicher virtueller Hosts gleichzeitig kann beispielsweise mittels Kubernetes-Daemon Sets gesteuert werden, die den Server-Einrichtungen bzw. virtuellen Hosts administrativ zugeordnet ist.

Die operativen Funktionseinheiten 101-104 haben insbesondere per SNMP, LLDP bzw. DCP Zugriff auf Konfigurationsdaten der ihnen jeweils zugeordneten Kommunikations- bzw. Automatisierungsgeräte. Anhand dieser Konfigurationsdaten werden Kommunikationsfunktionen der jeweiligen Kommunikations- bzw. Automatisierungsgeräte eingestellt oder abgefragt. Hierzu ist insbesondere die zentrale Steuerungseinheit 100 mit einer graphischen Benutzerschnittstelle ausgestattet. Damit können auf eine Benutzer-Eingabe Kommunikationsgeräte bzw. Gruppen von Kommunikationsgeräten ausgewählt werden, um beispielweise Kommunikationsbeziehungen zwischen den Kommunikationsgeräten zu definieren. Insbesondere können an der graphischen Benutzerschnittstelle innerhalb der Kommunikationsbeziehungen nutzbare Dienste festgelegt werden. Beispielsweise können Geräte, Gerätegruppen oder allgemein Objektgruppen ausgewählt werden, in deren Kommunikationsbeziehung SNTP, DHCP und Syslog als zulässige Dienste genutzt werden dürfen. Vorzugsweise umfasst die graphische Benutzerschnittstelle der zentralen Steuerungseinheit 100 Menüelemente für Netzüberwachung, Netzadministration und Systemüberwachung.

Nach einer graphischen Projektierung von Kommunikationsbeziehungen und zulässigen Diensten können durch die zentrale Steuerungseinheit 100 Kommunikationsnetzadressen ausgewählter Kommunikationsgeräte und nutzbaren Diensten zugeordnete Ports, Kommunikationsprotokolle bzw. Statusmeldungen ermittelt werden. Die den nutzbaren Diensten zugeordneten Statusmeldungen können insbesondere zulässige ICMP-Pakettypen umfassen. Darüber hinaus können mittels der zentralen Steuerungseinheit 100 topologisch zwischen den ausgewählten Kommunikationsgeräten angeordnete Firewall-Einrichtungen bzw. Gruppen von Firewall-Einrichtungen ermittelt werden. Hierzu sind für die Kommunikationsgeräte und Firewall-Einrichtungen topologische und gerätebezogene Informationen in einer Datenbank des Kommunikationsnetz-Management-Systems erfasst.

Die topologischen und gerätebezogenen Informationen können aus der Datenbank des Kommunikationsnetz-Management-Systems abgerufen und zur Darstellung der ausgewählten Kommunikationsgeräte sowie der topologisch zwischen diesen angeordneten Firewall-Einrichtungen an der graphischen Benutzerschnittstelle der zentralen Steuerungseinheit 100 dargestellt werden. Auf dieser Grundlage können Firewall-Regeln für die ausgewählten Kommunikationsgeräte definiert werden.

Zur Überwachung bzw. Steuerung des Edge Computing Geräts 203 durch das Kommunikationsnetz-Management-System ist dort eine Ablaufsteuerungskomponente 234d installiert, durch die eine Kommunikationssteuerungsanwendung implementiert wird, die Konfigurations- bzw. Geräteinformationen des Edge Computing Geräts 203 entsprechend einem Kommunikationsnetz-Management-Protokoll an das Kommunikationsnetz-Management-System bereitstellt. Vorzugsweise stellt die Kommunikationssteuerungsanwendung die Konfigurations- bzw. Geräteinformationen des Edge Computing Geräts 203 entsprechend Simple Network Management Protocol (SNMP), Link Layer Discovery Protocol (LLDP) bzw. Discovery and Basic Configuration Protocol (DCP) an das Kommunikationsnetz-Management-System bereit. Außerdem sind Kommunikationssteuerungsanwendungen für sämtliche Steuerungsanwendungen bereitstellende Kommunikations- bzw. Automatisierungsgeräte identisch ausgestaltet. Damit können entsprechende Ablaufsteuerungskomponenten einfach und effizient innerhalb eines Kommunikationssystems bzw. industriellen Automatisierungssystems ausgerollt werden.

Entsprechend der Darstellung in Figur 2 wird die Ablaufsteuerungskomponente 234d für die Kommunikationssteuerungsanwendung an eine geräteseitige generische Schnittstelle 400 zur Abstraktion von Geräteeigenschaften bzw. zur Bereitstellung von Gerätefunktionen des Edge Computing Geräts 203 gekoppelt. Diese Schnittstelle 400 umfasst eine Vielzahl an Funktionskomponenten 401-403, beispielsweise für Systemeinstellungen, Sicherheitsfunktionen, Netzkonfiguration, Speicherzugriffsfunktionen, Uhrzeiteinstellungen, Synchronisierungsfunktionen oder Switching-Funktionen.

Die generische Schnittstelle 400 greift wiederum auf eine Funktionsschicht 300 mit gerätespezifischen Diensten 301-303 zur Abfrage bzw. Einstellung von Geräteeigenschaften bzw. -funktionen des Edge Computing Geräts 203 zu. Mittels dieser Dienste 301-303 abgefragte bzw. eingestellte Konfigurations- bzw. Geräteinformationen werden über die generische Schnittstelle 400 entsprechend einem generischen Gerätefunktionsmodell an die Kommunikationssteuerungsanwendung des Edge Computing Geräts 203 bereitgestellt. Die gerätespezifischen Dienste 301-303 umfassen beispielsweise Zertifikatsdienste, Proxy Manager Funktionen, NTP Manager Funktionen (Network Time Protocol), Systemstart- bzw. Systemstopp-Funktionen oder Funktionen zur Abfrage von Gerätefehlern bzw. -ereignissen.

Im vorliegenden Ausführungsbeispiel ist das Edge Computing Gerät 203 als Switch bzw. Bridge ausgestaltet und umfasst als Hardware-Komponenten 231 insbesondere mehrere Anschlüsse für weitere Kommunikationsgeräte, mehrere den Anschlüssen zugeordnete Sende- und Empfangseinheiten, einen Backplane-Switch zur selektiven Übermittlung von Frames zwischen den Sende- und Empfangseinheiten, einen Controller für den Backplane Switch sowie einen Pufferspeicher für über den Backplane Switch weiterzuleitende Frames. Dabei hat die Ablaufsteuerungsumgebung 233 über eine entsprechende Schnittstelle Zugriff auf den Backplane Switch und auf die Sende- und Empfangseinheiten. Der Controller für den Backplane Switch ist insbesondere zur Verarbeitung eines Kommunikationsprotokollstapels ausgestaltet und dient zur Bereitstellung Funktionen gemäß z.B. Media Redundancy Protocol (MRP), High-availability Seamless Redundancy Protocol (HSR), Link-local Registration Protocol (LRP), Resource Allocation Protocol (RAP) bzw. zur Implementierung von VLAN-Funktionen.

## Patentansprüche

1. Verfahren zur Überwachung und/oder Steuerung von Steuerungsanwendungen bereitstellenden Kommunikationsgeräten durch ein Kommunikationsnetz-Management-System,
- durch mehrere Kommunikationsgeräte (203) jeweils Steuerungsanwendungen mittels Ablaufsteuerungskomponenten (234, 234a-d) bereitgestellt werden, die in mittels der Kommunikationsgeräte gebildete Ablaufsteuerungsumgebungen (233) ladbar und dort ausführbar sind,
- in den Steuerungsanwendungen bereitstellenden Kommunikationsgeräten jeweils eine Kommunikationssteuerungsanwendung (234d) installiert wird, die Konfigurations- und/oder Geräteinformationen des jeweiligen Kommunikationsgeräts entsprechend einem Kommunikationsnetz-Management-Protokoll an das Kommunikationsnetz-Management-System (100-103) bereitstellt,
- die Kommunikationssteuerungsanwendungen jeweils an eine geräteseitige generische Schnittstelle (400) zur Abstraktion von Geräteeigenschaften und/oder zur Bereitstellung von Gerätefunktionen des jeweiligen Kommunikationsgeräts gekoppelt werden,
- die generischen Schnittstellen jeweils auf gerätespezifische Dienste (301-303) zur Abfrage und/oder Einstellung von Geräteeigenschaften und/oder -funktionen des jeweiligen Kommunikationsgeräts zugreifen und mittels dieser Dienste abgefragte und/oder eingestellte Konfigurations- und/oder Geräteinformationen an die Kommunikationssteuerungsanwendungen bereitstellen.

2. Verfahren nach Anspruch 1,
bei dem die Ablaufsteuerungskomponenten Software-Container sind oder umfassen, die jeweils von anderen Software-Containern oder Container-Gruppen isoliert innerhalb der Ablaufsteuerungsumgebung auf einem Host-Betriebssystem ablaufen, das im jeweiligen Steuerungsanwendungen bereitstellenden Kommunikationsgerät installiert ist.

3. Verfahren nach Anspruch 2,
bei dem die Software-Container jeweils gemeinsam mit anderen auf dem Kommunikationsgerät ablaufenden Software-Containern einen Kernel des Host-Betriebssystems des jeweiligen Steuerungsanwendungen bereitstellenden Kommunikationsgeräts nutzen.

4. Verfahren nach einem der Ansprüche 2 oder 3,
bei dem Speicherabbilder für die Software-Container aus einem durch eine Vielzahl von Nutzern lesend und/oder schreibend zugreifbaren Speicher- und Bereitstellungssystem abrufbar sind.

5. Verfahren nach einem der Ansprüche 1 bis 4,
bei dem die Ablaufsteuerungskomponenten jeweils vom Kommunikationsgerät auf ein anderes, im Wesentlichen gleichartiges Kommunikationsgerät und/oder auf eine Server-Einrichtung zur dortigen Ausführung migrierbar und/oder auf anderen Kommunikationsgeräten und/oder auf Server-Einrichtungen zeitgleich ausführbar sind.

6. Verfahren nach einem der Ansprüche 1 bis 5,
bei dem ausgewählte Ablaufsteuerungskomponenten Dienste und/oder Funktionen eines industriellen Automatisierungssystems bereitstellen.

7. Verfahren nach Anspruch 6,
bei dem die Dienste jeweils mehrere gleichartige oder identische Ablaufsteuerungskomponenten umfassen, die durch unterschiedliche Kommunikationsgeräte und/oder Server-Einrichtungen bereitgestellt werden.

8. Verfahren nach einem der Ansprüche 1 bis 7,
bei dem die Steuerungsanwendungen bereitstellenden Kommunikationsgeräte jeweils mehrere Anschlüsse für weitere Kommunikationsgeräte, mehrere den Anschlüssen zugeordnete Sende- und Empfangseinheiten, ein Kopplungselement zur geschalteten Verknüpfung der Sende- und Empfangseinheiten und einen Pufferspeicher für über das Kopplungselement weiterzuleitende Datagramme aufweisen, bei dem den Sende- und Empfangseinheiten und dem Kopplungselement eine Controller-Funktionseinheit zur Verarbeitung eines Kommunikationsprotokollstapels zugeordnet ist, bei dem die Steuerungsanwendungen bereitstellenden Kommunikationsgeräte jeweils einen Prozessor zur Verarbeitung von Programm-Code und einen Programm-Code-Speicher aufweisen und bei dem die Ablaufsteuerungsumgebungen jeweils mittels des Prozessors und des Speichers gebildet werden, wobei die Ablaufsteuerungsumgebungen jeweils eine Schnittstelle zum Zugriff auf das Kopplungselement und auf die Sende- und Empfangseinheiten aufweisen.

9. Verfahren nach Anspruch 8,
bei dem die Steuerungsanwendungen bereitstellenden Kommunikationsgeräte Switches oder Bridges sind, bei dem das Koppel-Element ein Backplane-Switch ist, bei dem die Controller-Funktionseinheit ein Controller für den Backplane Switch ist und bei dem die Controller-Funktionseinheit Funktionen gemäß Media Redundancy Protocol, High-availability Seamless Redundancy Protocol, Link-local Registration Protocol, Resource Allocation Protocol implementiert und/oder VLAN-Funktionen bereitstellt.

10. Verfahren nach einem der Ansprüche 1 bis 9,
bei dem die Kommunikationssteuerungsanwendungen die Konfigurations- und/oder Geräteinformationen des jeweiligen Kommunikationsgeräts entsprechend Simple Network Management Protocol, Link Layer Discovery Protocol und/oder Discovery and Basic Configuration Protocol an das Kommunikationsnetz-Management-System bereitstellen.

11. Verfahren nach einem der Ansprüche 1 bis 10,
bei dem Kommunikationssteuerungsanwendungen für sämtliche Steuerungsanwendungen bereitstellende Kommunikationsgeräte identisch ausgestaltet sind.

12. Verfahren nach einem der Ansprüche 1 bis 11,
bei dem die generischen Schnittstellen jeweils mittels der gerätespezifischen Dienste abgefragte und/oder eingestellte die Konfigurations- und/oder Geräteinformationen entsprechend einem generischen Gerätefunktionsmodell an die Kommunikationssteuerungsanwendungen bereitstellen.

13. Kommunikationsgerät, insbesondere zur Durchführung des Verfahrens nach einem der Ansprüche 1 bis 12, mit
- einer Ablaufsteuerungsumgebung (233), die dazu ausgestaltet und eingerichtet ist, Steuerungsanwendungen mittels Ablaufsteuerungskomponenten (234, 234a-d) bereitzustellen, die in die Ablaufsteuerungsumgebung ladbar und dort ausführbar sind,
- einer installierten Kommunikationssteuerungsanwendung (234a), die dazu ausgestaltet und eingerichtet ist, Konfigurations- und/oder Geräteinformationen des Kommunikationsgeräts entsprechend einem Kommunikationsnetz-Management-Protokoll an ein Kommunikationsnetz-Management-System (100-103) bereitzustellen,
- wobei die Kommunikationssteuerungsanwendung an eine geräteseitige generische Schnittstelle (400) zur Abstraktion von Geräteeigenschaften und/oder zur Bereitstellung von Gerätefunktionen des Kommunikationsgeräts gekoppelt ist,
- wobei die generische Schnittstelle dazu ausgestaltet und eingerichtet ist, auf gerätespezifische Dienste (301-303) zur Abfrage und/oder Einstellung von Geräteeigenschaften und/oder -funktionen des Kommunikationsgeräts zuzugreifen und mittels dieser Dienste abgefragte und/oder eingestellte Konfigurations- und/oder Geräteinformationen an die Kommunikationssteuerungsanwendung bereitstellen.
